# EUROPEAN PATENT SPECIFICATION

(11) **EP 3 492 358 B1**
(45) Date of publication and mention of the grant of the patent: **30.09.2020**
(21) Application number: 17834258.0
(22) Date of filing: 24.07.2017
(51) Int. Cl.: B62J 1/12, A47C 31/02, B32B 27/18, B41J 2/01, B60N 2/58

(54) **VEHICLE SEAT AND VEHICLE**
FAHRZEUGSITZ UND FAHRZEUG
SIÈGE DE VÉHICULE ET VÉHICULE

(30) Priority: 26.07.2016 JP 2016145915
(43) Date of publication of application: 05.06.2019
(73) Proprietor: Yamaha Hatsudoki Kabushiki Kaisha, Iwata-shi, Shizuoka 438-8501 (JP)
(72) Inventor: OISHI, Takeshi, Iwata-shi Shizuoka 438-8501 (JP); MASHIKO, Tetsuya, Iwata-shi Shizuoka 438-8501 (JP)
(74) Representative: Grünecker Patent- und Rechtsanwälte PartG mbB
(86) International application number: PCT/JP2017/026719
(87) International publication number: WO 2018/021252

(56) References cited:
- EP-A1- 2 135 802
- WO-A1-2015/001732
- WO-A1-2015/001732
- JP-A- H11 157 204
- JP-A- 2010 132 234
- JP-A- 2012 121 490
- JP-A- 2013 522 112
- JP-A- 2014 151 788
- JP-A- 2016 010 912
- JP-A- 2016 087 241

## Description

### TECHNICAL FIELD

The present invention relates to a vehicle seat and a vehicle.

### BACKGROUND ART

In general, a vehicle seat includes a cushion member having an appropriate level of resilience and an outer cover member covering the cushion member. Patent Document 1 discloses a seat for a straddled vehicle. FIG. **25** shows a seat **90** for a straddled vehicle disclosed in Figure 2(A) and Figure 2(B) in Patent Document 1. FIG. **25(a)** is a cross-sectional view showing a part of the seat **90,** and FIG. **25(b)** is a planar view showing a part of the seat **90** as seen from below.

The seat **90** includes a seat base **91** and an outer cover member **92.** The seat base **91** includes a bottom plate **93** and a cushion member **94** located on the bottom plate **93.** The outer cover member **92** covers the cushion member **94.** The seat base **91** includes a sitting plane **91a** corresponding a sitting plane and a side wall **91b** extending downward from a perimeter of the sitting plane **91a.**

The outer cover member **92** has a size larger than that of a surface of the seat base **91** such that a covering work is easily done. As shown in the figure, a peripheral portion of the outer cover member **92** is folded back at a tip of the side wall **91b** of the seat base **91** and is secured to a back surface of the side wall 91b (back surface of the bottom plate **93)** by staples **95** (is stapled).

The covering work of the outer cover member **92** is performed as follows specifically. First, the sitting plane **91a** of the seat base 91 is covered with the outer cover member **92.** Next, the peripheral portion of the outer cover member **92** is pulled in a direction in which the side wall **91b** extends. Then, in the state where the peripheral portion of the outer cover member **92** is pulled, the outer cover member **92** is folded back at the tip of the side wall **91b.** Next, the peripheral portion of the outer cover member **92** overlapping the back surface of the side wall **91** is stapled by use of a tucker or the like. The staples **95** are driven sequentially along a circumferential direction in the state where the outer cover member **92** is pulled. In this step, a small number of staples **95** may be driven at a relatively large interval, so that the outer cover member **92** is temporarily secured.

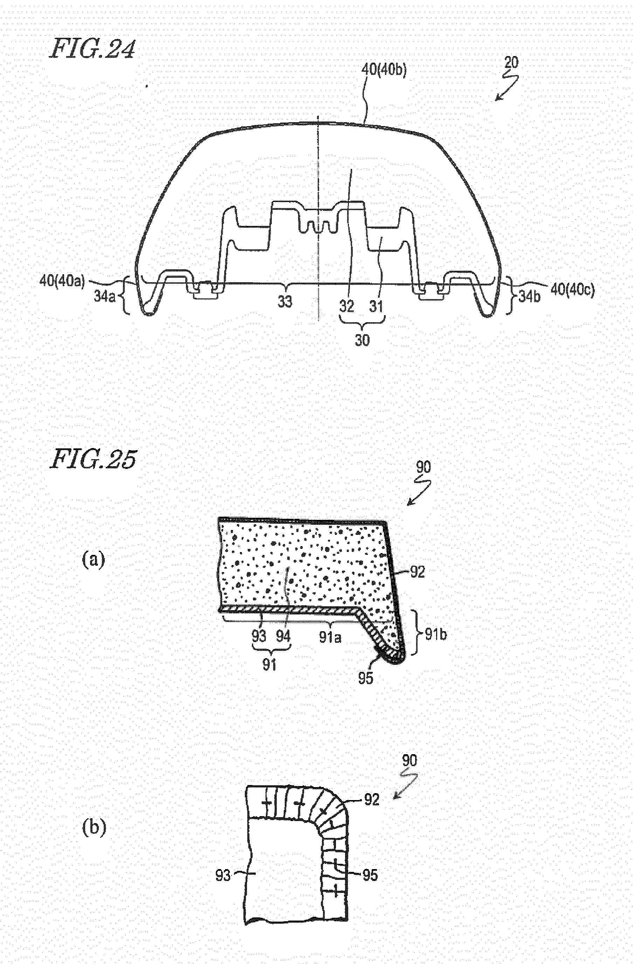

The outer cover member **92** needs to be secured while being pulled at an appropriate force such that a portion overlapping the sitting plane **91a** and a portion overlapping the side wall **91b** are not wrinkled or broken. Since the outer cover member **92** has a size larger than that of the surface of the seat base **91** as described above, there is an extra portion in the peripheral portion of the outer cover member **92.** As shown in FIG. **25(b)****,** this extra portion is secured by the staples **95** while being partially folded up or is wrinkled between adjacent staples **95.**

### CITATION LIST

### PATENT LITERATURE

Patent Document 1: Japanese Examined Utility Model Application Publication No. H1-20232

### SUMMARY OF INVENTION

### TECHNICAL PROBLEM

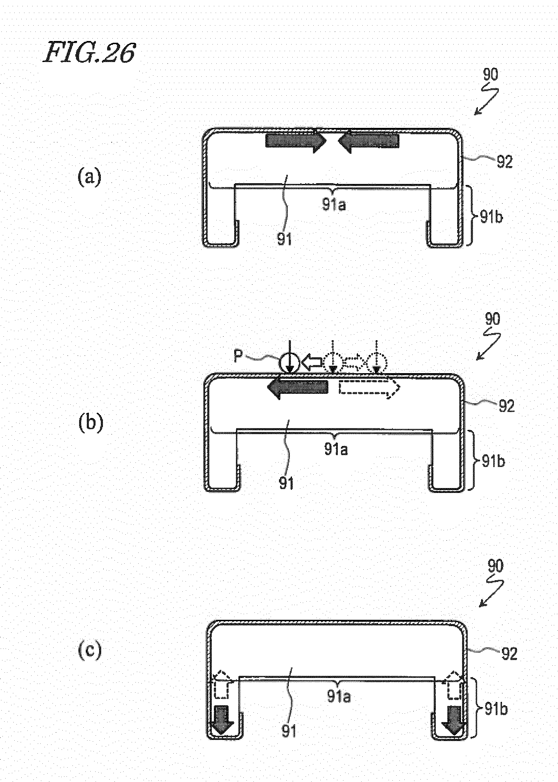

A vehicle seat may have the following problems due to an external force (tensile force) acting on an outer cover member. FIG. **26(a),** FIG. **26(b)** and FIG. **26(c)** are schematic views each showing a tensile force acting on the outer cover member **92** of the seat **90.**

On a region of the outer cover member **92** that covers the sitting plane **91a,** a tensile force in a width direction (left-right direction) acts. For example, at the time of cornering, the outer cover member **92** is, as shown in FIG. **26(a)****,** acted on by a tensile force caused by the rider holding the seat **90** relatively strongly with his/her legs (thighs) (such a tensile force that pulls the outer cover member **92** to the center thereof), or is, as shown in FIG. **26(b)****,** acted on by a tensile force caused by the loading position P of buttocks or thighs moving on the sitting plane **91a.** As a result of such a tensile force acting in repetition, the outer cover member **92** is wrinkled or slacked.

On a region of the outer cover member **92** that covers the side wall **91b,** a tensile force in an up-down direction acts. For example, when the rider gets on, or gets off from, the vehicle or when the vehicle stops, the legs of the rider (or the passenger) contacts strongly (rubs) the outer cover member **92.** As shown in FIG. **26(c)****,** this causes a tensile force in the up-down direction to act on the outer cover member **92.** Such a tensile force also causes the outer cover member **92** to be wrinkled or slacked.

A textured portion including microscopic convex portions and concave portions may be formed in the outer cover member of the vehicle seat mainly for the purpose of providing an effect of preventing slipping. In the case where such a textured portion is formed, the legs or the buttocks of the rider (or the passenger) are easily stuck with the outer cover member, and thus the outer cover member is more likely to be wrinkled or slacked. In addition, the outer cover member having such a textured portion is easily deformed in a pulling direction from the concave portions, and thus is easily stretchable than an outer cover member having a smooth surface (namely, an outer cover member with no textured portion). Therefore, when being acted on by the tensile force in repetition, the region of the outer cover member that covers the sitting plane is easily slacked. In the case where the volume of the cushion member is decreased with aging, such slacking is more conspicuous.

The present invention made in light of the above-described problem has an object of providing a vehicle seat suppressing an outer cover member from being wrinkled or slacked.

### SOLUTION TO PROBLEM

A vehicle seat in an embodiment according to the present invention includes a seat base including a plate member and a cushion member stacked on a surface of the plate member; and an outer cover member covering the cushion member, the outer cover member being secured to a back surface of the plate member. The seat base includes a rider support, a first side wall extending in a thickness direction of the rider support from one end of the rider support in a cross-section parallel to a width direction and the thickness direction of the rider support, and a second side wall extending in the thickness direction of the rider support from the other end of the rider support in the cross-section; the outer cover member includes a first outer region overlapping the first side wall, a support region continuous to the first outer region and overlapping the rider support, and a second outer region continuous to the support region and overlapping the second side wall; the outer cover member has a textured portion including a convex portion and a concave portion, the textured portion being formed in the first outer region, the support region and the second outer region; the outer cover member further includes an ink layer continuously formed on the convex portion and the concave portion in each of the first outer region, the support region and the second outer region; and a portion of the ink layer that is located on the concave portion has a thickness larger than that of a portion of the ink layer that is located on the convex portion.

In an embodiment, the rider support of the seat base is undulated.

In an embodiment, the first side wall and the second side wall of the seat base each include two areas that are continuous to each other and have different lengths in the thickness direction of the rider support.

In an embodiment, the ink layer contains a resin material; and the outer cover member further includes an outer cover member main body supporting the ink layer, and an intermediate layer provided between the outer cover member main body and the ink layer, the intermediate layer containing a resin material of a same type as the resin material contained in the ink layer.

In an embodiment, the resin material contained in the ink layer is an acrylic resin; and the intermediate layer contains an acrylic resin.

In an embodiment, the portion of the ink layer that is located on the concave portion does not exceed a height from a trough of the concave portion to a peak of the convex portion.

A vehicle in an embodiment according to the present invention includes the vehicle seat having any of the above-described structures.

Hereinafter, functions and effects of an embodiment according to the present invention will be described.

In a vehicle seat according to the present invention, the ink layer is continuously formed on the convex portion and the concave portion of the textured portion in each of the first outer region, the support region and the second outer region of the outer cover member. Therefore, as compared with a case where the ink layer is not formed, the rigidity of the first outer region, the support region and the second outer region (hereinafter, referred to as an "outer cover rigidity") is higher. Therefore, even if the tensile force in the width direction acts on the outer cover member in repetition, the outer cover member is suppressed from being stretched. Especially, a portion of the ink layer located on the concave portion (continuous from a portion of the ink layer located on the convex portion) plays a role of limiting the convex portion (i.e., restricting the movement of the convex portion). Therefore, the outer cover member is suppressed from being stretched in a preferred manner. Thus, the present invention suppresses the outer cover member from being slacked. In addition, in a vehicle seat according to the present invention, the thickness of the portion of the ink layer located on the concave portion is larger than the thickness of the portion of the ink layer located on the convex portion. Therefore, the convex portion adjacent to the concave portion is limited more strongly (the movement of the convex portion is restricted with more certainty). This suppresses the outer cover member from being stretched in a more preferred manner.

In the case where the rider support of the seat base is undulated, the tensile force easily acts on the outer cover member. Therefore, the present invention is highly effective when being applied to the structure in which the rider support of the seat base is undulated.

In the case where the first side wall and the second side wall of the seat base each include two areas that are continuous to each other and have different lengths in the thickness direction of the rider support, portions of the outer cover member corresponding to these areas are easily subjected to different tensile forces. Therefore, the outer cover member is easily slacked as the time of use lapses. Thus, the present invention is highly effective when being applied to the structure in which the first side wall and the second side wall of the seat base each have two different areas that are continuous to each other and have different heights.

The outer cover member may further include an intermediate layer provided between the outer cover member main body and the ink layer. In the case where the intermediate layer contains a resin material of the same type as the resin material contained in the ink layer, the resin material in the intermediate layer and the resin material in the ink layer have a high level of affinity to each other. Therefore, the adhesion of the ink layer is increased. Such a high level of affinity also provides an effect of improving the ability of the ink layer of being colored.

A preferable resin material contained in the ink layer is, for example, an acrylic resin. The acrylic resin has a high transparency and a high climate resistance. In the case where the ink layer contains an acrylic resin, the intermediate layer preferably contains a resin of the same type, namely, an acrylic resin.

If the thickness of the portion of the ink layer located on the concave portion exceeds the height from the trough of the concave portion to the peak of the convex portion, the concave portion is completely filled with the ink layer. In this case, the touch of the textured portion (convex and concave portions) is changed. For this reason, it is preferred that the thickness of the portion of the ink layer located on the concave portion does not exceed the height from the trough of the concave portion to the peak of the convex portion.

### ADVANTAGEOUS EFFECTS OF INVENTION

An embodiment of the present invention provides a vehicle seat suppressing an outer cover member from being wrinkled or slacked.

### BRIEF DESCRIPTION OF DRAWINGS

[FIG. **1**] FIG. **1** is a side view schematically showing a straddled vehicle (motorcycle) **1** in an embodiment according to the present invention.
[FIG. **2**] FIG. **2** is an isometric view schematically showing a seat **20** included in the motorcycle 1.
[FIG. **3**] FIG. **3** is a side view schematically showing the seat **20.**
[FIG. **4**] FIG. **4** is a cross-sectional view taken along line **4A-4A'** in FIG. **3****,** schematically showing the seat **20.**
[FIG. **5**] FIG. **5(a),** FIG. **5(b)** and FIG. **5(c)** respectively show cross-sectional structures of a first side wall **34a,** a sitting plane **33** and a second side wall **34b** of a seat base **30** schematically.
[FIG. **6**] FIG. **6** schematically shows a cross-sectional structure of a first outer region **40a,** a support region **40b** and a second outer region **41c** of an outer cover member **40.**
[FIG. **7**] FIG. **7** is a side view showing a part of the seat base **30.**
[FIG. **8**] FIG. **8** is a side view showing a part of the seat base **30.**
[FIG. **9**] FIG. **9** is a cross-sectional view schematically showing an ink layer **50'** formed by a screen printing method.
[FIG. **10**] FIG. **10(a)** and FIG. **10(b)** are each an optical micrograph showing an outer cover member (including no ink layer) having a textured portion of pattern A.
[FIG. **11**] FIG. **11(a)** and FIG. **11(b)** are each an optical micrograph showing an outer cover member (including no ink layer) having a textured portion of pattern B.
[FIG. **12**] FIG. **12(a)** and FIG. **12(b)** are each an optical micrograph showing an outer cover member having a textured portion of pattern A and including an ink layer formed by an inkjet method.
[FIG. **13**] FIG. **13(a)** and FIG. **13(b)** are each an optical micrograph showing an outer cover member having a textured portion of pattern B and including an ink layer formed by an inkjet method.
[FIG. **14**] FIG. **14(a)** and FIG. **14(b)** are each an optical micrograph showing an outer cover member having a textured portion of pattern A and including an ink layer formed by the screen printing method.
[FIG. **15**] FIG. 15(a) and FIG. 15 **(b)** are each an optical micrograph showing an outer cover member having a textured portion of pattern B and including an ink layer formed by the screen printing method.
[FIG. **16**] FIG. **16(a),** FIG. **16(b)** and FIG. **16(c)** are respectively graphs showing roughness curves of outer cover members having a textured portion of patter A, in the case where no ink layer is formed, in the case where an ink layer is formed by the inkjet method, and in Lhe case where an ink layer is formed by the screen printing method.
[FIG. **17**] FIG. **17(a),** FIG. **17(b)** and FIG. **17(c)** are respectively graphs showing roughness curves of outer cover members having a textured portion of patter B, in the case where no ink layer is formed, in the case where an ink layer is formed by the inkjet method, and in the case where an ink layer is formed by the screen printing method.
[FIG. **18**] FIG. **18(a),** FIG. **18(b)** and FIG. **18(c)** are each a schematic view showing a cross-sectional structure in the case where an ink layer is formed by the inkjet method on an outer cover member having a textured portion of pattern A.
[FIG. **19**] FIG. **19(a),** FIG. **19(b)** and FIG. **19(c)** are each a schematic view showing a cross-sectional structure in the case where an ink layer is formed by the inkjet method on an outer cover member having a textured portion of pattern B.
[FIG. **20**] FIG. **20(a),** FIG. **20(b)** and FIG. **20(c)** are each a schematic view showing a cross-sectional structure in the case where an ink layer is formed by the screen printing method on an outer cover member having a textured portion of pattern A.
[FIG. **21**] FIG. **21(a),** FIG. **21(b)** and FIG. **21(c)** are each a schematic view showing a cross-sectional structure in the case where an ink layer is formed by the screen printing method on an outer cover member having a textured portion of pattern B.
[FIG. **22**] FIG. **22(a)** shows an ink layer **50** formed by the inkjet method, and FIG. **22(b)** shows an ink layer **50'** formed by the screen printing method.
[FIG. **23**] FIG. **23(a),** FIG. **23(b)** and FIG. **23(c)** respectively show cross-sectional structures of the first side wall **34a,** the sitting plane **33** and the second side wall **34b** of the seat base **30** schematically.
[FIG. **24**] FIG. **24** is a cross-sectional view taken along line **4A-4A'** in FIG. **3****,** schematically showing the seat **20.**
[FIG. **25**] FIG. **25(a)** and FIG. **25(b)** are respectively a cross-sectional view and a planar view showing a part of a straddled vehicle seat **90** disclosed in Patent Document 1.
[FIG. **26**] FIG. **26(a),** FIG. **26(b)** and FIG. **26(c)** schematically show a tensile force acting on an outer cover member **92** of the seat **90.**

### DESCRIPTION OF EMBODIMENTS

Hereinafter, embodiments of the present invention will be described with reference to the drawings. The present invention is not limited to any of the following embodiments.

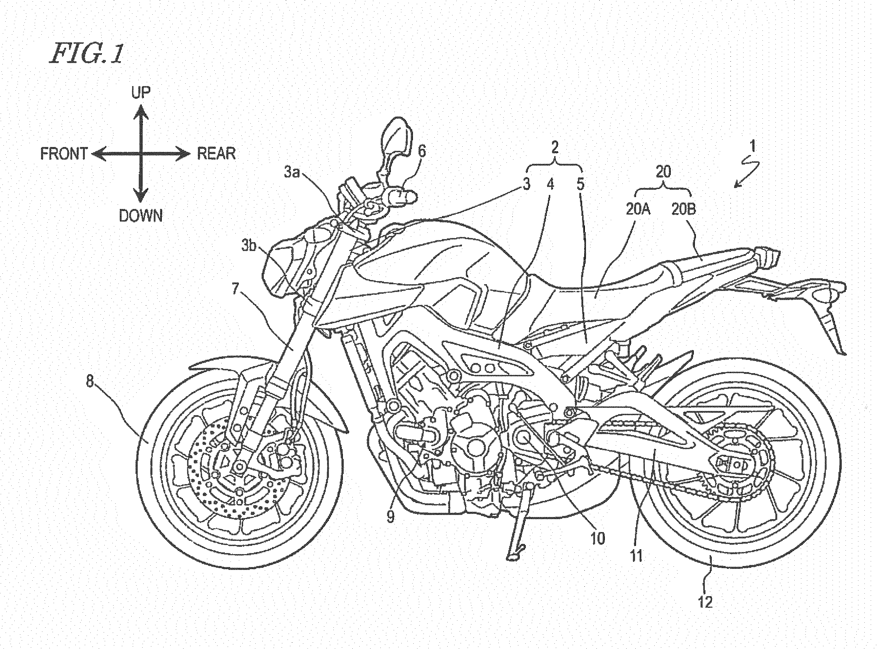

FIG. **1** show a straddled vehicle **1** in this embodiment. FIG. **1** is a side view schematically showing the straddled vehicle **1.** As shown in FIG. **1****,** the straddled vehicle **1** is an on-load type motorcycle. In the following description and the drawings, the terms "front", "rear", "left", "right", "up" and "down" respectively refer to front, rear, left, right, up and down as seen from a rider of the motorcycle.

As shown in FIG. **1****,** the motorcycle **1** includes a vehicle frame **2.** The vehicle frame **2** includes a head pipe **3,** a main frame **4,** and a seat rail **5.** The main frame **4** extends obliquely rearward and downward from the head pipe **3.** The seat rail **5** extends obliquely rearward and slightly upward from the main frame **4.** A seat **20** is attached on the seat rail **5**. The seat **20** includes a rider seat **20A** on which the rider may sit and a tandem seat **20B** on which a passenger may sit.

A steering shaft (not shown) is inserted through the head pipe 3. At a top end and a bottom end of the steering shaft, brackets (an upper bracket and an under bracket) **3a** and **3b** are respectively coupled. A pair of extendable front wheel support members **7** are coupled with the brackets **3a** and **3b.** At bottom ends of the front wheel support members **7,** a front wheel **8** is rotatably attached.

An engine **9** is suspended to the main frame **4.** At a rear end of the main frame **4,** a rear arm **11** is attached swingably as being centered around a pivot shaft **10.** At a rear end of the rear arm **11,** a rear wheel **12** is rotatably attached.

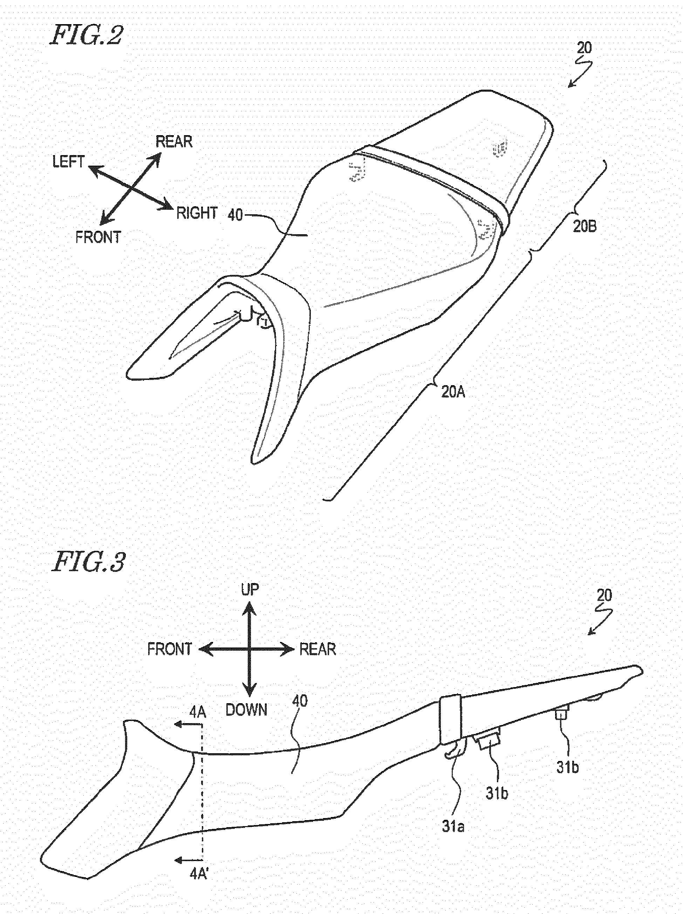

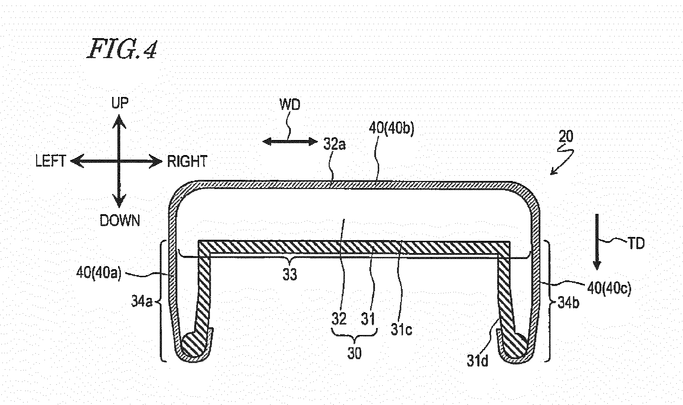

Now, with reference to FIG. **2,** FIG. **3** and FIG. **4****,** a structure of the seat (vehicle seat) **20** included in the motorcycle **1** will be described. FIG. **2,** FIG. **3** and FIG. **4** are respectively an isometric view, a side view and a cross-sectional view schematically showing the seat **20.** FIG. **4** shows a cross-section taken along line **4A-4A'** in FIG. **3****.**

As shown in FIG. **2,** FIG. **3** and FIG. **4****,** the seat **20** includes a seat base **30** and an outer cover member **40.** As shown in FIG. **4****,** the seat base **30** includes a plate member **31** and a cushion member **32.** For easier understanding, FIG. **4** shows the cross-sectional structure of the plate member **31** in a simplified manner.

The plate member (referred to also as a "bottom plate") **31** supports the cushion member **32.** The plate member **31** forms a bottom portion of the seat **20,** and has a role of providing a certain level of strength to the entirety of the seat **20.** Therefore, the plate member **31** is preferably formed of a relatively highly rigid material. The material of the plate member **31** may be, specifically, a resin material such as polypropylene or the like. The plate member **31** includes a stay **31a** and a mount **31b** securing the seat **20** to the seat rail **5**.

The cushion member **32** is stacked on a surface **31c** of the plate member **31.** The cushion member **32** is preferably formed of a material that keeps having an appropriate level of resilience for a long time in order to keep providing a high level of comfort of riding. A preferable material of the cushion member **32** may be, for example, foamed polyurethane (urethane foam), but is not limited to this.

The outer cover member **40** covers the cushion member **32.** The outer cover member **40** is stacked on a surface **32a** of the cushion member **32.** The outer cover member **40** is secured to a back surface **31d** of the plate member **31.** The outer cover member **40** may be secured to the plate member **31** by, for example, stapling. The outer cover member **40** (more precisely, an outer cover member main body **40y** described below) includes, for example, a base layer (lining; formed of, for example, wooly nylon) and a PVC (polyvinylchloride) layer (outer layer) covering a surface of the base layer, but is not limited to having such a structure, needless to say. For example, the outer cover member main body **40y** may be formed of, for example, synthetic leather, artificial leather, natural leather or the like.

As shown in FIG. **4****,** the seat base **30** includes a rider support **33** supporting at least a part of the body of the rider. In this example, the rider support **33** is a sitting plane that supports the buttocks of the rider.

The seat base **30** further includes a first side wall **34a** and a second side wall **34b.** The first side wall **34a** extends in the thickness direction **TD** (downward) from one end of the sitting plane **33** in a cross-section parallel to a width direction **WD** and the thickness direction **TD** of the sitting plane **33** (i.e., cross-section parallel to the paper sheet of FIG. **4**). The second side wall **34b** extends in the thickness direction **TD** (downward) from the other end of the sitting plane **33** in the above-identified cross-section.

The outer cover member **40** includes a first outer region **40a** overlapping the first side wall **34a,** a support region **40b** overlapping the sitting plane (rider support) **33,** and a second outer region **40c** overlapping the second side wall **34b.** The first outer region **40a** and the support region **40b** are continuous to each other, and the support region **40b** and the second outer region **40c** are continuous to each other.

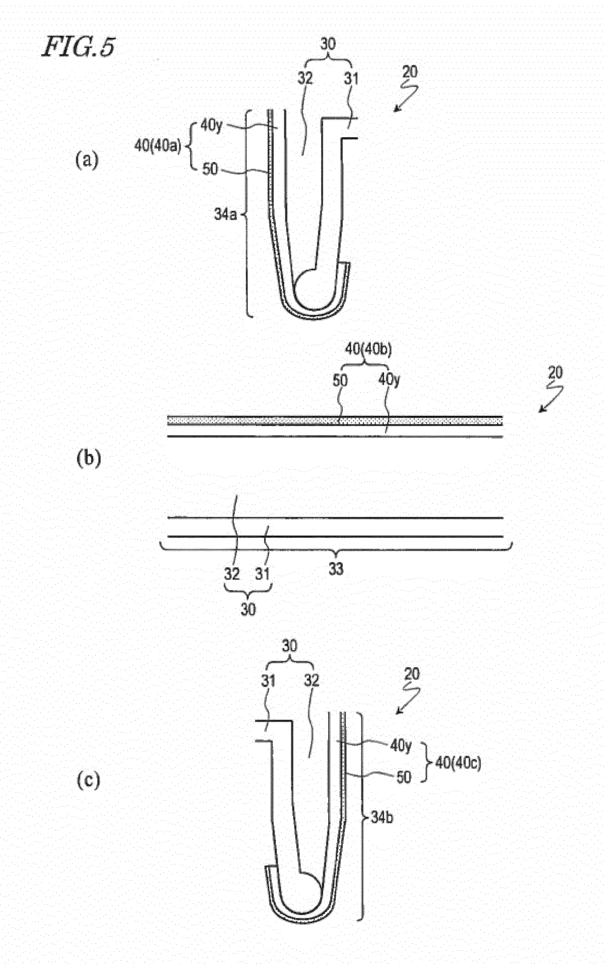

FIG. **5(a),** FIG. **5(b)** and FIG. **5(c)** respectively show cross-sectional structures of the first side wall **34a,** the sitting plane **33** and the second side wall **34b** in enlargement. As shown in FIG. **5(a),** FIG. **5(b)** and FIG. **5(c)****,** the outer cover member **40** includes an ink layer **50** formed in the first outer region **40a,** the support region **40b** and the second outer region **40c.** Hereinafter, a portion **40y** of the outer cover member **40** other than the ink layer **50** (portion supporting the ink layer **50**) will be referred to as the "outer cover member main body". The ink layer **50** may be colored or transparent (i.e., non-colored). The ink layer **50** may have a stack structure including a colored layer and a transparent layer formed on the colored layer.

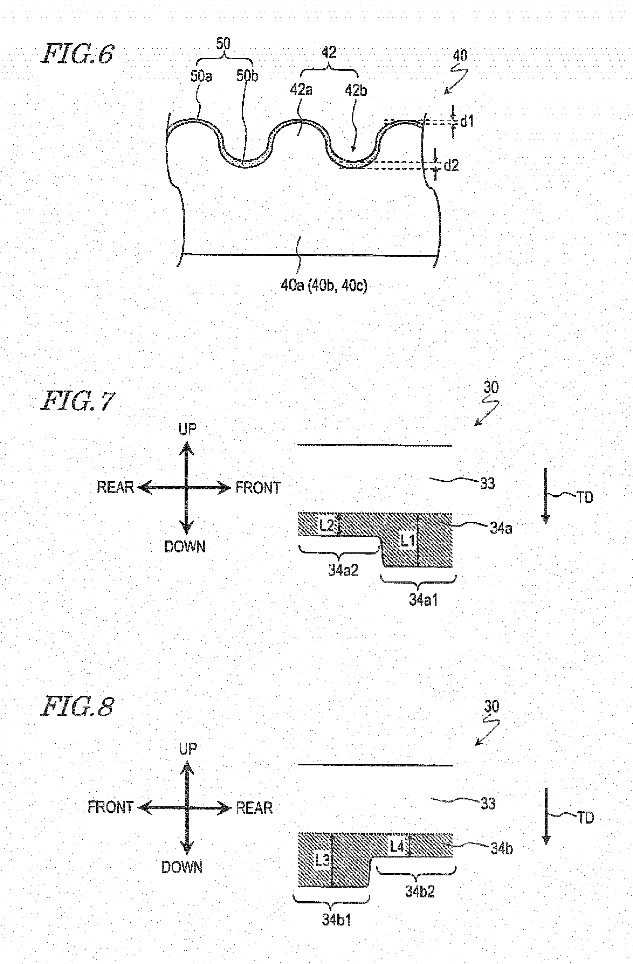

FIG. **6** shows a cross-sectional structure of the first outer region **40a,** the support region **40b** and the second outer region **40c.** As shown in FIG. **6****,** a textured portion **42** is formed in the first outer region **40a,** the support region **40b** and the second outer region **40c** of the outer cover member **40.** The textured portion **42** includes a plurality of convex portions **42a** and a plurality of concave portions **42b.** The textured portion **42** including the convex portions **42a** and the concave portions **42b,** which are microscopic, may provide the outer cover member **40** with an effect of preventing slipping or improve the external appearance of the outer cover member **40.** There is no specific limitation on the size or the pitch of the convex portions **42a** or the concave portions **42b** of the textured portion **42.** A height difference between a peak of the convex portions **42a** and a trough of the concave portions **42b** is, for example, about 10 µm to about 110 µm.

As shown in FIG. **6****,** the ink layer **50** is continuously formed on the convex portions **42a** and the concave portions **42b** of the textured portion **41.** Thickness **d1** of a portion **50a** of the ink layer **50** located on the convex portions **42a** (hereinafter, such a portion will be referred to as a "convex region"), and thickness **d2** of a portion **50b** of the ink layer **50** located on the concave portions **42b** (hereinafter, such a portion will be referred to as a "concave region"), are different from each other. Specifically, thickness **d2** of the concave region **50b** of the ink layer **50** is larger than thickness **d1** of the convex region **50a** of the ink layer **50.** In this specification, the comparison between thickness **d1** of the convex region **50a** of the ink layer **50** and thickness **d2** of the concaved region **50b** of the ink layer **50** is a comparison between the thickness of the region corresponding to the peak of the convex portions **42a** and the thickness of the region corresponding to the trough of the concave portions **42b.** Namely, unless otherwise specified, thickness **d1** of the convex region **50a** is the thickness on the peak of the convex portions **42a,** and thickness **d2** of the concave region **50b** is the thickness on the trough of the concave portions **42b.** The "peak" is a portion of the convex portions **42a** that protrudes most. The "trough" is a portion of the concave portions **42b** that is recessed most.

Thickness **d1** of the convex region **50a** of the ink layer **50** is, for example, 5 µm to 20 µm. Thickness **d2** of the concave region **50b** of the ink layer **50** is, for example, 20 µm to 50 µm. Needless to say, the thicknesses of the ink layer **50** are not limited to the above.

As described above, in the seat (vehicle seat) **20** in this embodiment, the ink layer **50** is continuously formed on the convex portions **42a** and the concave portions **41b** of the textured portion **42** in the first outer region **40a,** the support region **41b** and the second outer region **41c** of the outer cover member **40.** Therefore, as compared with a case where the ink layer **50** is not formed, the rigidity of the first outer region **40a,** the support region **41b** and the second outer region **41c** (rigidity of a stack structure including the outer cover member main body **40y** and the ink layer **50;** hereinafter, referred to as an "outer cover rigidity") is higher. Therefore, even if the tensile force in the width direction acts on the outer cover member **40** in repetition, the outer cover member **40** is suppressed from being stretched. Especially, the concave region **50b** (continuous from the convex region **50a)** of the ink layer **50** plays a role of limiting the convex portions **42a** (restricting the movement of the convex portions **42a).** Therefore, the outer cover member **40** is suppressed from being stretched in a preferred manner. This suppresses the outer cover member **40** from being slacked. In addition, in this embodiment, thickness **d2** of the concave region **50b** of the ink layer **50** is larger than thickness d1 of the convex region **50a.** Therefore, the convex portions **42a** adjacent to the concave portions **42b** are limited more strongly (the movement of the convex portions **42a** is restricted with more certainty). This suppresses the outer cover member **40** from being stretched in a more preferred manner.

The ink layer **50** is preferably harder than the outer cover member main body **40y.** In the case where the ink layer **50** is harder than the outer cover member main body **40y,** the outer cover rigidity of the first outer region **40a,** the support region **40b** and the second outer region **40c** is further increased. Thus, the outer cover member **40** is further suppressed from being slacked.

As seen from FIG. **2,** FIG. **3** and the like, with the structure in this embodiment, the sitting plane **33** of the seat **30** is undulated. Namely, a surface (top surface) of the sitting plane **33** is not flat but includes a relatively high portion and a relatively low portion. In the case where the sitting plane **33** of the seat base **30** is undulated, the tensile force easily acts on the outer cover member **40.** Therefore, this embodiment of the present invention is highly effective when being applied to the structure in which the sitting plane **33** of the seat base **30** is undulated.

The first side wall **34a** and the second side wall **34b** of the seat base **30** may each include two areas that are continuous to each other and have different lengths in the thickness direction **TD** of the sitting plane **33.** FIG. **7** and FIG. **8** show examples of such areas. FIG. **7** and FIG. **8** are each a side view showing a part of the seat base **30.** In FIG. **7** and FIG. **8****,** for easier understanding, the plate member **31** and the cushion member **32** are integrally shown, and the first side wall **34a** and the second side wall **34b** are hatched (the sitting plane **33** is not hatched).

The two areas **34a1** and **34a2** of the first side wall **34a** shown in FIG. **7** are continuous to each other in a front-rear direction and have different lengths **L1** and **L2** in the thickness direction **TD** of the sitting plane **33.** The two areas **34b1** and **34b2** of the second side wall **34b** shown in FIG. **8** are continuous to each other in the front-rear direction and have different lengths **L3** and **L4** in the thickness direction **TD** of the sitting plane **33.** In the case where the first side wall **34a** includes such areas **34a1** and **34a2** as described above, portions of the outer cover member **40** corresponding to the areas **34a1** and **34a2** are easily subjected to different tensile forces. Similarly, in the case where the second side wall **34b** includes such areas **34b1** and **34b2** as described above, portions of the outer cover member **40** corresponding to the areas **34b1** and **34b2** are easily subjected to different tensile forces. Therefore, the outer cover member **40** is easily slacked along with time of use. Thus, this embodiment of the present invention is highly effective when being applied to the structure in which the side walls of the seat base **30** (first side wall **34a** and second side wall **34b)** each have two different areas that are continuous to each other and have different heights.

The ink layer **50** may decorate the outer cover member **40.** Namely, the ink layer **50** may exhibit a predetermined color, a predetermined letter, a predetermined pattern, a predetermined image or the like.

If thickness **d2** of the concave region **50b** of the ink layer **50** exceeds the height from the trough of the concave portions **42b** to the peak of the convex portions **42a,** the concave portions **42b** are completely filled with the ink layer **50.** In this case, the touch of the textured portion (convex and concave portions) **42** is changed. For this reason, it is preferred that thickness **d2** of the concave region **50b** of the ink layer **50** does not exceed the height from the trough of the concave portions **42b** to the peak of the convex portions **42a.**

The ink layer **50** is formed by a printing method. A preferably usable printing method may be, specifically, an inkjet method. A screen printing method is also a well known printing method. Studies made by the inventors of the present application have shown that with the screen printing method, it is difficult to form the ink layer **50** continuously on the microscopic convex portions **42a** and concave portions **42b** of the textured portion **42** as described above.

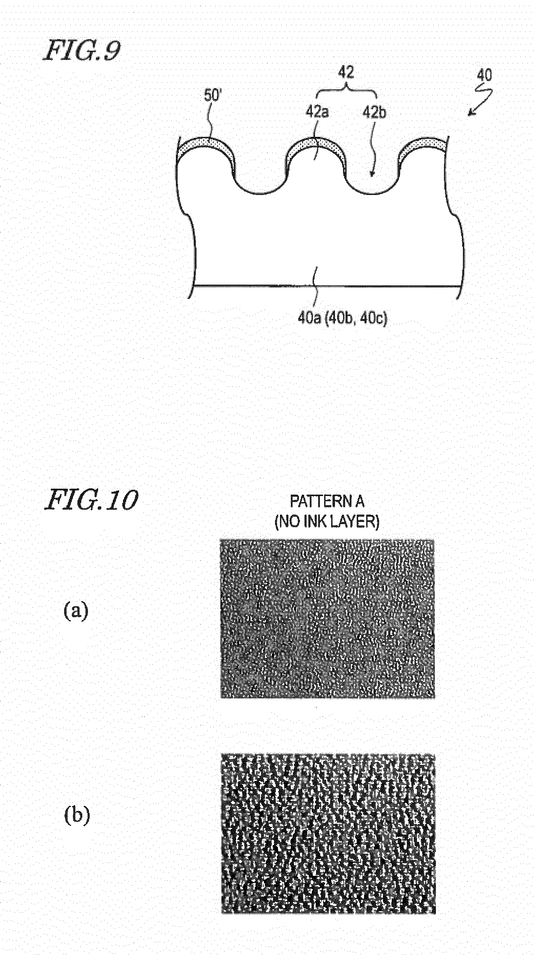

FIG. **9** schematically shows an ink layer **50'** formed by the screen printing method. In the case where the screen printing method is used, as shown in FIG. **9****,** the ink layer **50'** is formed on the convex portions **42a** but is not formed on the concave portions **42b.** A conceivable reason is the following. With the screen printing method, a relatively highly viscous ink material is extruded (rubbed) through holes of a screen by use of a squeegee. Therefore, the ink material is not easily attached to the concave portions **42b,** which are at a lower position than the convex portions **42a.**

By contrast, with the inkjet method, the ink material is injected from a nozzle of an inkjet printer as microscopic ink drops. Therefore, the ink material is attached to the concave portions **42b** as well as the convex portions **42a.** Thus, the ink layer **50** is continuously formed on the microscopic convex portions **42a** and the microscopic concave portions **42b** of the textured portion **42** in a preferred manner. In the case where the inkjet method is used, the viscosity or the like of the ink material may be appropriately adjusted (e.g., the ink material may be adjusted to have a low viscosity than that of the ink material used for the screen printing method), so that the ink material attached to the convex portions **42a** partially move to the concave portions **42b** by its own weight. Therefore, thickness **d2** of the portion of the ink layer **50** on the concave portions **42b** (thickness **d2** of the concave region) is made larger than thickness **d1** of the portion of the ink layer **50** on the convex portions **42a** (thickness **d1** of the convex region).

In the case where the inkjet method is used, examples of the usable ink material (material used to form the ink layer **50)** include solvent-based ink, UV-based ink, and solvent-UV-based ink.

The solvent-based ink contains a pigment, a resin acting as a binder (e.g., thermoplastic resin), and an organic solvent. In the case where the solvent-based ink is used, the solvent-based ink is attached onto the outer cover member **40** and is heated to evaporate the organic solvent (is thermally dried) to form the ink layer **50.** The ink layer **50** formed by use of the solvent-based ink has a high climate resistance.

The UV-based ink contains a pigment, a photopolymerizable monomer and/or oligomer as a precursor of a resin acting as a binder, and a photoinitiator. In the case where the UV-based ink is used, the UV-based ink is attached onto the outer cover member **40** and is irradiated with ultraviolet to form the ink layer **50.** The ink layer **50** formed by use of the UV-based ink has a high rubfastness.

The solvent-UV-based ink contains both of the components of the solvent-based ink and the components of the UV-based ink. The solvent-UV-based ink, for example, dilutes a polymer compound with a solvent to provide viscosity and also rubfastness and climate resistance. In the case where the solvent-UV-based ink is used, the solvent-UV-based ink is attached onto the outer cover member **40,** and is irradiated with ultraviolet and thermally dried to form the ink layer **50.** The ink layer **50** formed by use of the solvent-UV-based ink has both of a high climate resistance and a high rubfastness.

Whichever ink may be used, the resultant ink layer **50** contains a resin material. A preferable resin material contained in the ink layer is, for example, an acrylic resin. The acrylic resin has a high transparency and a high climate resistance. Whichever ink may be used, the pigment, among the above-described components, may be removed to make the ink transparent.

The textured portion **42** may be formed in the outer cover member **40** by any of various known texturing methods.

Now, an ink layer was formed by the inkjet method on an outer cover member having a textured portion, and separately, an ink layer was formed by the screen printing method on an outer cover member having a textured portion. In each case, an external appearance of the outer cover member including the ink layer was observed. The results will be described.

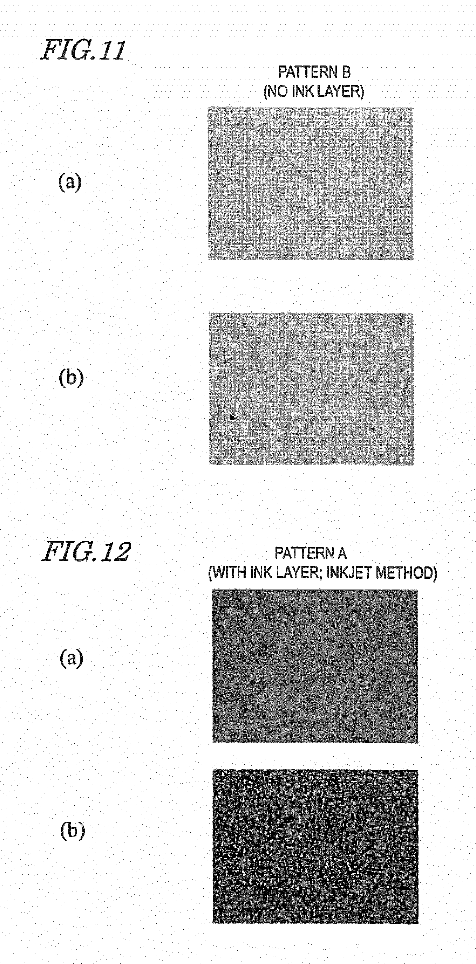

Outer cover members having textured portions of two patterns shown in FIG. **10** and FIG. **11** were prepared. FIG. **10** and FIG. **11** are each an optical micrograph of such an outer cover member (the ink layer is not formed) . As seen from the scale bars in the figures, FIG. 10 **(b)** and FIG. **11(b)** are of a higher magnification than FIG. **10(a)** and FIG. **11(a)**.

The textured portion of the outer cover member shown in FIG. **10(a)** and FIG. **10(b)** has a satin finish with a relatively small size and a relatively small pitch of the convex portions and the concave portions (hereinafter, such a pattern will be referred to as a "pattern A"). The textured portion of the outer cover member shown in FIG. **11(a)** and FIG. **11(b)** has a larger size and a larger pitch of the convex portions and the concave portions than those of pattern A (hereinafter, such a pattern will be referred to as a "pattern B") .

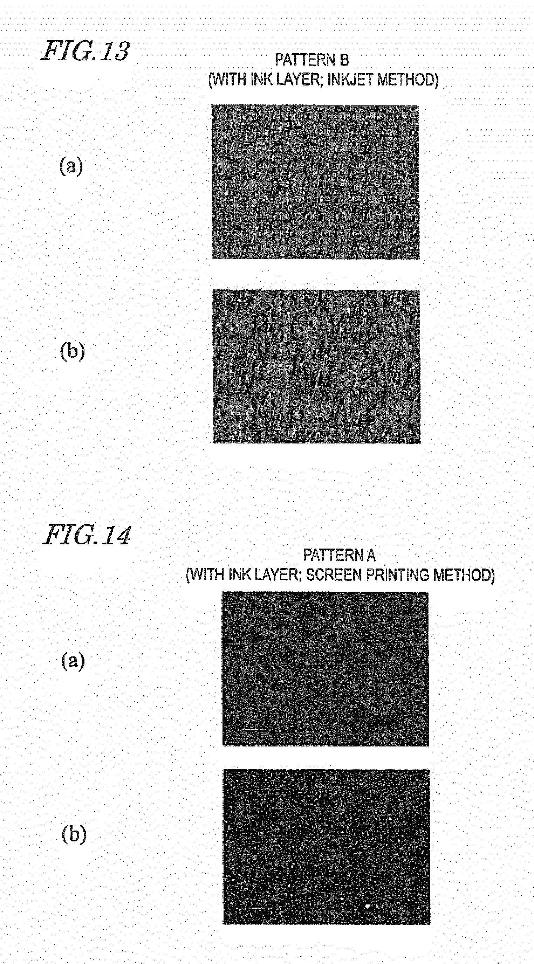

FIG. **12** and FIG. **13** show optical micrographs of the outer cover members each including an ink layer formed by the inkjet method. It is seen from FIG. **12(a),** FIG. **12(b),** FIG. **13(a)** and FIG. **13** (b) that even after the ink layer is formed, the external appearance of each outer cover member sufficiently reflects the convex and concave shape of the textured portion below the ink layer. Namely, it is seen that the textured portion is not completely filled with the ink layer.

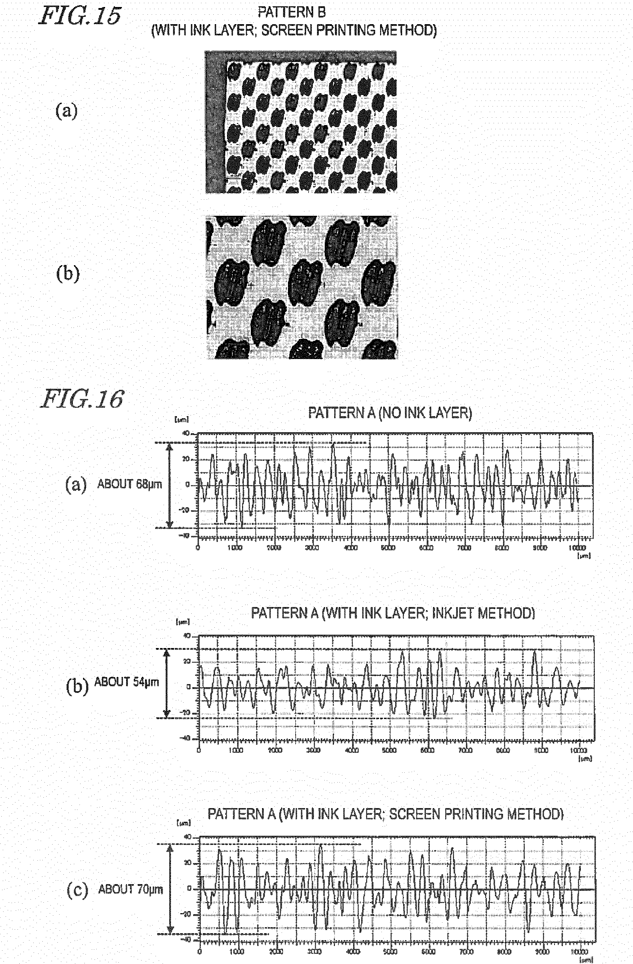

FIG. **14** and FIG. **15** show optical micrographs of the outer cover members each including an ink layer formed by the screen printing method. It is seen from FIG. **14(a),** FIG. **14(b)****,** FIG. **15(a)** and FIG. **15(b)** that in this case also, the external appearance of each outer cover member reflects the convex and concave shape of the textured portion. However, as seen from a comparison of FIG. **13(a)** and FIG. **13(b)** against FIG. **15(a)** and FIG. **15(b)****,** in the case where the screen printing method is used, the contrast in the micrograph is more conspicuous than in the case where the inkjet method is used. This is caused because the ink layer is formed only on the convex portions of the textured portion but is not formed on the concave portions.

Now, on each of an outer cover member including no ink layer, an outer cover member including an ink layer formed by the inkjet method, and an outer cover member including an ink layer formed by the screen printing method, the convex and concave shape was measured by a surface roughness meter. The results will be described.

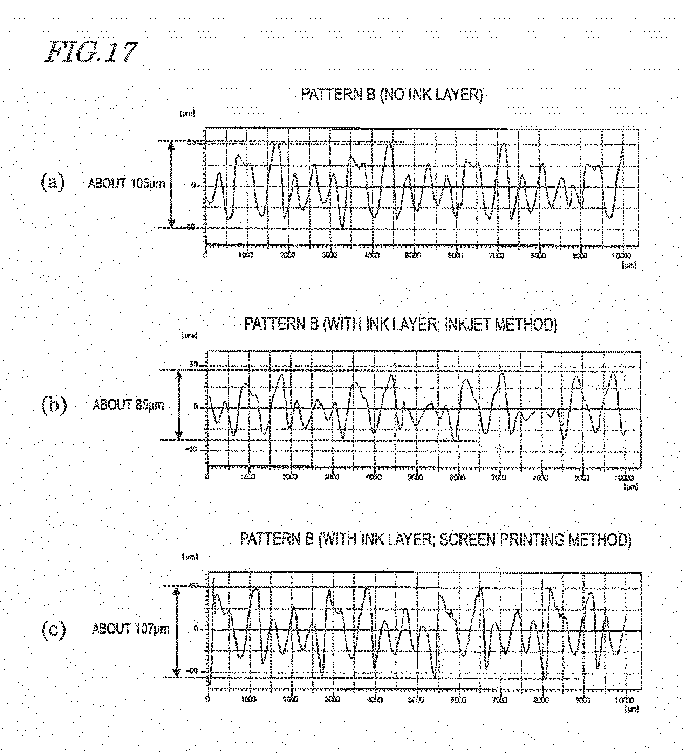

FIG. **16(a),** FIG. **16(b)** and FIG. **16(c)** respectively show roughness curves of an outer cover member including no ink layer, an outer cover member including an ink layer formed by the inkjet method, and an outer cover member including an ink layer formed by the screen printing method. All the outer cover members have the textured portion of pattern A. FIG. **16(a),** FIG. **16(b)** and FIG. **16(c)** also each show the maximum height (the largest height difference between the peak and the trough) of the roughness curve. This is applicable to FIG. **17** described below. The "roughness" refers to the height of a waviness of the convex and concave portions of the outer cover member.

From a comparison between FIG. **16(a)** and FIG. **16(b)****,** it is seen that the height difference is smaller in the case where the ink layer is formed by the inkjet method than in the case where no ink layer is formed. A reason for this is that in the case where the ink layer is formed by the inkjet method, the thickness of a portion of the ink layer that corresponds to the concave portions of the textured portion is larger than the thickness of a portion of the ink layer that corresponds to the convex portions of the textured portion.

From a comparison between FIG. **16(a)** and FIG. **16(c)****,** it is seen that the height difference is larger in the case where the ink layer is formed by the screen printing method than in the case where no ink layer is formed. A reason for this is that in the case where the ink layer is formed by the screen printing method, the ink layer is formed on the convex portions of the textured portion but is not formed on the concave portions of the textured portion.

FIG. **17(a),** FIG. **17(b)** and FIG. **17(c)** respectively show roughness curves of an outer cover member including no ink layer, an outer cover member including an ink layer formed by the inkjet method, and an outer cover member including an ink layer formed by the screen printing method. All the outer cover members have the textured portion of pattern B.

From a comparison between FIG. **17(a),** FIG. **17(b)** and FIG. **17(c)****,** it is seen that the outer cover members having the textured portion of patter B have the same tendency as that of the outer cover members having the textured portion of pattern A.

Now, on each of an outer cover member including an ink layer formed by the inkjet method and an outer cover member including an ink layer formed by the screen printing method, the cross-sectional structure was observed. The results will be described.

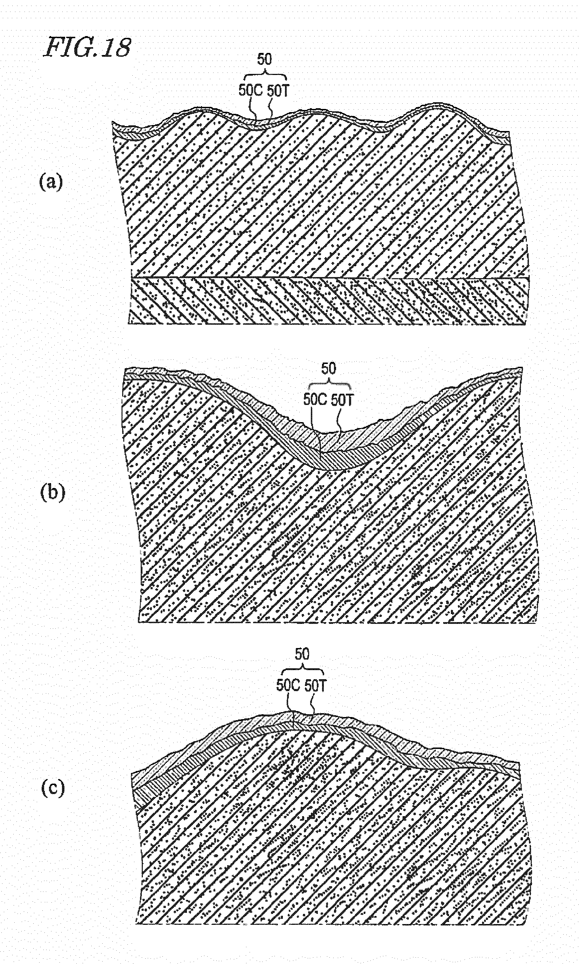

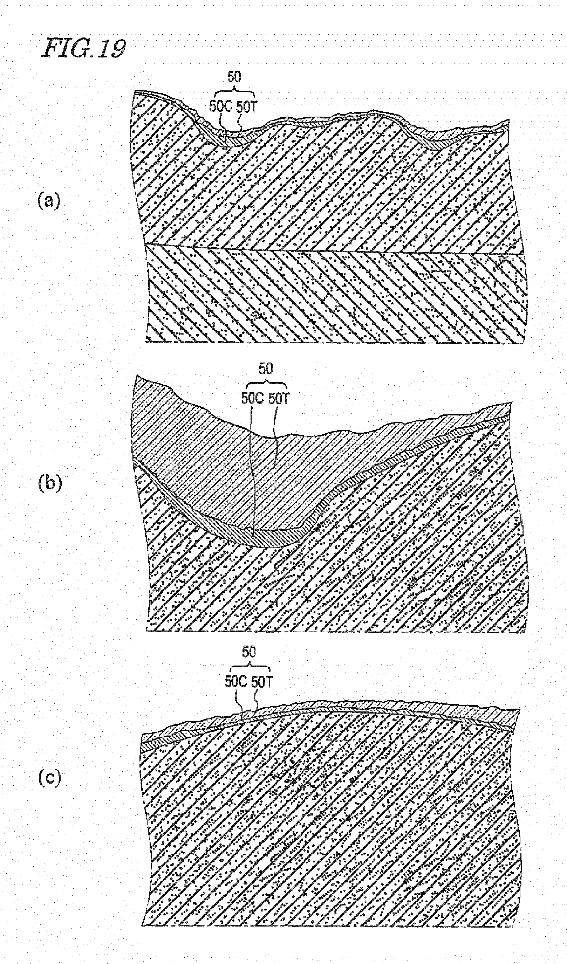

FIG. **18(a),** FIG. **18(b)** and FIG. **18(c)** are schematic views showing the cross-sectional structure of the ink layer formed by the inkjet method on the outer cover member having the textured portion of pattern A. FIG. **18(b)** and FIG. **18(c)** show the cross-sectional structure at a larger scale than that in FIG. **18(a).** FIG. **18(b)** and FIG. **18(c)** show the cross-sectional structure at the same scale. In the example shown in FIG. **18(a),** FIG. **18(b)** and FIG. **18(c)****,** the ink layer **50** has a stack structure including a color layer **50C** and a transparent layer **50T** stacked on the color layer **50C.** The same is applicable to the example shown in FIG. **19** described below.

From FIG. **18(a)****,** it is seen that the ink layer is continuously formed on the convex portions and the concave portions of the textured portion. From FIG. **18(b)** and FIG. **18(c)****,** it is seen that the portion of the ink layer that is located on the concave portions has a thickness larger than that of the portion of the ink layer that is located on the convex portions.

FIG. **19(a),** FIG. **19(b)** and FIG. **19(c)** are schematic views showing the cross-sectional structure of the ink layer formed by the inkjet method on the outer cover member having the textured portion of pattern B. FIG. **19(b)** and FIG. **19(c)** show the cross-sectional structure at a larger scale than that in FIG. **19(a).** FIG. **19(b)** and FIG. **19(c)** show the cross-sectional structure at the same scale.

From FIG. **19(a)****,** it is seen that the ink layer is continuously formed on the convex portions and the concave portions of the textured portion. From FIG. **19(b)** and FIG. **19(c)****,** it is seen that the portion of the ink layer that is located on the concave portions has a thickness larger than that of the portion of the ink layer that is located on the convex portions.

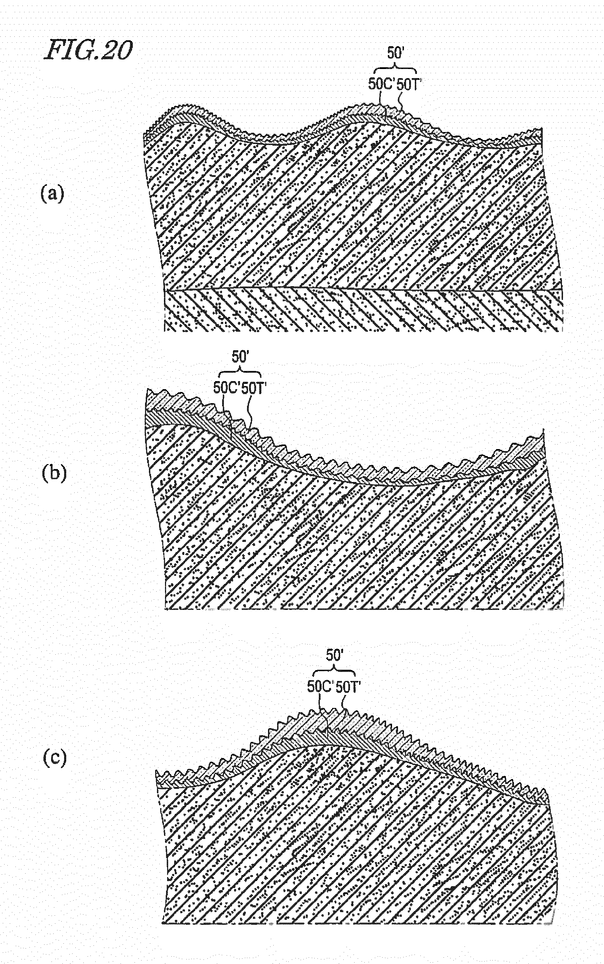

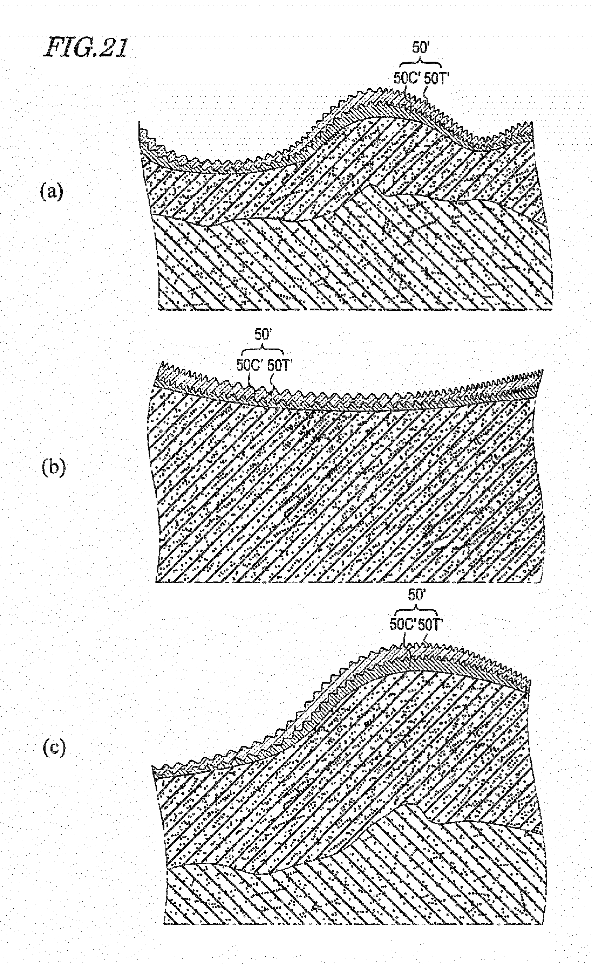

FIG. **20(a),** FIG. **20(b)** and FIG. **20(c)** are schematic views showing the cross-sectional structure of the ink layer formed by the screen printing method on the outer cover member having the textured portion of pattern A. FIG. **20(b)** and FIG. **20(c)** show the cross-sectional structure at a larger scale than that in FIG. **20(a)**. FIG. **20(b)** and FIG. **20(c)** show the cross-sectional structure at the same scale. In the example shown in FIG. **20(a),** FIG. **20(b)** and FIG. **20(c)****,** the ink layer **50'** has a stack structure including a color layer **50C'** and a transparent layer **50T'** stacked on the color layer **50C'.** The same is applicable to the example shown in FIG. **21** described below.

From FIG. **20(a),** FIG. **20(b)** and FIG. **20(c)****,** it is seen that the ink layer is formed on the convex portions of the textured portion but is not much formed on the concave portions (the ink layer is thin).

FIG. **21(a),** FIG. **21(b)** and FIG. **21(c)** are schematic views showing the cross-sectional structure of the ink layer formed by the screen printing method on the outer cover member having the textured portion of pattern B. FIG. **21(b)** and FIG. **21(c)** show the cross-sectional structure at a larger scale than that in FIG. **21(a).** FIG. **21(b)** and FIG. **21(c)** show the cross-sectional structure at the same scale.

From FIG. **21(a),** FIG. **21(b)** and FIG. **21(c)****,** it is seen that the ink layer is formed on the convex portions of the textured portion but is not much formed on the concave portions (the ink layer is thin) .

It is seen from the above description made with reference to FIG. **12** through FIG. **21****,** use of the inkjet method allows the ink layer **50** to be preferably formed continuously on the convex portions **42a** and the concave portions **42b** of the textured portion **42.**

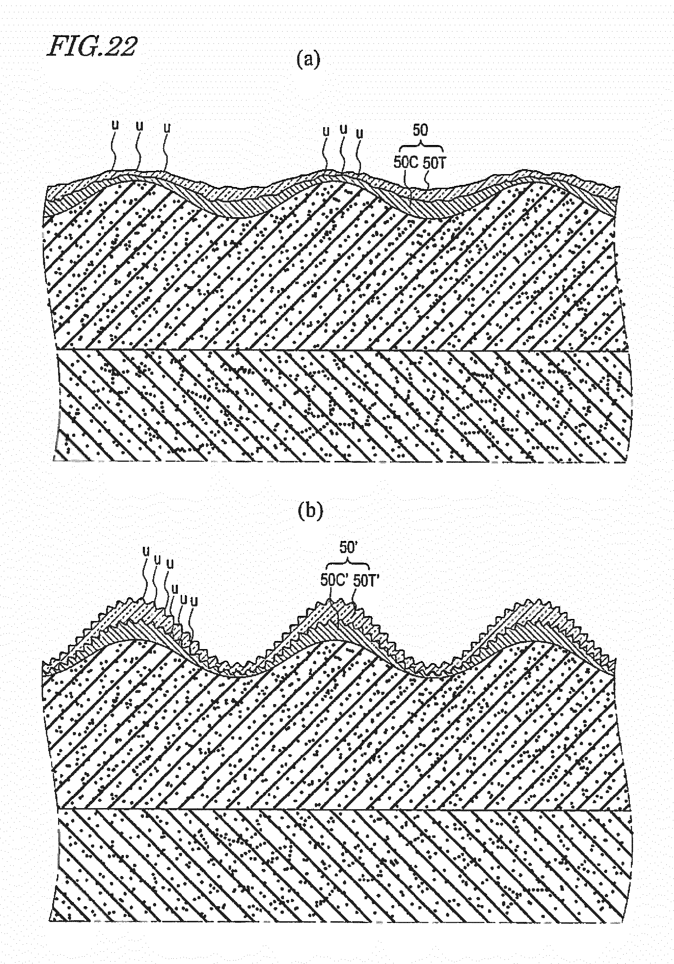

Now, with reference to FIG. **22(a)** and FIG. **22(b)****,** a difference in the surface structure between the ink layer formed by the inkjet method and the ink layer formed by the screen printing method, more specifically, a difference in microscopic ruggedness at the surface (hereinafter, referred to as the "microscopic ruggedness" or the "microscopic roughness") between the two ink layers, will be described. FIG. **22(a)** shows the ink layer **50** formed by the inkjet method, and FIG. **22(b)** shows the ink layer **50'** formed by the screen printing method.

As seen from a comparison between FIG. **22** (a) and FIG. **22(b)****,** a microscopic ruggedness **u** (microscopic roughness) at the surface of the ink layer **50** formed by the inkjet method is smaller than that of the surface of the ink layer **50'** formed by the screen printing method. More specifically, in the ink layer **50** formed by the inkjet method, the microscopic ruggedness **u** of each of the colored layer **50C** and the transparent layer **50T** is smaller.

The "microscopic ruggedness" refers to the smoothness of the surface of the ink layer that follows the textured pattern of the outer cover member main body. More specifically, the "microscopic ruggedness" refers to the height of the ink layer from a line obtained as a result of the waviness of the convex and concave portions at the surface of the outer cover member main body being corrected to a straight line (average line of the waviness) in a cross-section of the seat taken along the thickness direction. As the height of the ink layer is lower, the smoothness is lower. Namely, the expression that the "microscopic ruggedness is smaller" indicates that the height, from the surface of the wavy line of the ink layer, of the microscopic ruggedness that is convex and concave in a direction normal to the surface is small.

As described above, the ink layer formed by the inkjet method has a small microscopic ruggedness (microscopic roughness) of the surface thereof. Therefore, cracks starting from the surface are not easily continued, and thus the rigidity and the durability are increased.

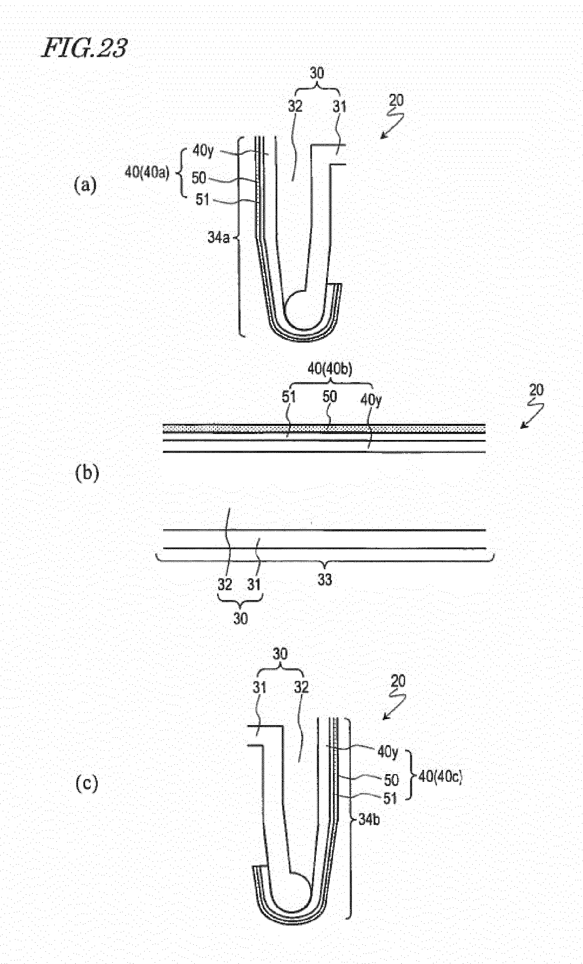

In the above, a structure in which the ink layer **50** is directly formed on the outer cover member **40** is described. The seat **20** in this embodiment is not limited to having such a structure. As shown in FIG. **23(a),** FIG. **23(b)** and FIG. **23(c)****,** the seat **20** may further include an intermediate layer (underlying layer) **51** provided between the outer cover member main body **40y** and the ink layer **50.** The intermediate layer **51** may be formed of, for example, a resin material. In the case where the intermediate layer **51** contains a resin material of the same type as the resin material contained in the ink layer **50,** the resin material in the intermediate layer **51** and the resin material in the ink layer **50** have a high level of affinity to each other. Therefore, the adhesion of the ink layer **50** is increased. Such a high level of affinity also provides an effect of improving the color exhibiting ability of the ink layer **50.** For example, in the case where the ink layer **50** contains an acrylic resin, the intermediate layer **51** preferably contains a resin of the same type, namely, an acrylic resin.

FIG. **4** and the like show the shape of the plate member **31** in a simplified manner. There is no specific limitation on the shape of the plate member **31** as long as the plate member **31** allows the seat base **30** to include the side wall **34.** FIG. **24** shows an example of shape of the plate member **31.** FIG. **24** is a cross-sectional view schematically showing the seat **20,** taken along line **4A-4A'** in FIG. **3****.** In the example shown in FIG. **24****,** the sitting plane **33** of the plate member **31** includes a plurality of regions having different heights (namely, includes a stepped portion) . As can be seen, the plate member **31** may have any of various shapes in accordance with the structure of the seat rail **5.**

The motorcycle **1** shown in FIG. 1 is of an on-load type. The straddled vehicle in this embodiment may be of a so-called off-road type, a moped type, a scooter type or any other type. The term "straddled vehicle" refers to any vehicle on which a rider rides astride, and is not limited to a two-wheel vehicle. The straddled vehicle may be, for example, a three-wheel vehicle (LMW), the vehicle body of which is inclined to change the advancing direction.

The present invention is not limited to being applicable to the seat of a straddled vehicle, and may be applicable to a vehicle seat widely. For example, the present invention is usable for a seat of a four-wheel automobile.

In the above, the rider support **33** is the sitting plane. The rider support does not need to be the sitting plane. In a seat including a backrest or a headrest, the rider support may be a portion that supports the back of the rider or a portion that supports the head of the rider.

### INDUSTRIAL APPLICABILITY

An embodiment according to the present invention provides a vehicle seat that suppresses an outer cover member from being wrinkled or slacked. An embodiment according to the present invention is preferably usable for a seat of any of various types of vehicles.

### REFERENCE SIGNS LIST

**1** Motorcycle (straddled vehicle)
**20 Seat**
**30** Seat base
**31** Plate member
**32** Cushion member
**33** Rider support (sitting plane)
**34a** First side wall
**34b** Second side wall
**40** Outer cover member
**40a** First outer region
**40b** Support region
**40c** Second outer region
**40y** Outer cover member main body
**42** Textured portion
**42a** Convex portion
**42b** Concave portion
**50** Ink layer
**50a** Convex region of the ink layer (portion located on the convex portions of the textured portion)
**50b** Concave region of the ink layer (portion located on the concave portions of the textured portion)
**51** Intermediate portion

## Claims

1. A vehicle seat (20), comprising:
a seat base (30) including a plate member (31) and a cushion member (32) stacked on a surface (31c) of the plate member (31); and
an outer cover member (40) covering the cushion member (32), the outer cover member (40) being secured to a rear surface (31d) of the plate member (31);
wherein:
the seat base (30) includes a rider support (33), a first side wall (34a) extending in a thickness direction (TD) of the rider support (33) from one end of the rider support (33) in a cross-section parallel to a width direction (WD) and the thickness direction (TD) of the rider support (33), and a second side wall (34b) extending in the thickness direction (TD) of the rider support (33) from the other end of the rider support (33) in the cross-section;
the outer cover member (40) includes:
a first outer region (40a) overlapping the first side wall (34a),
a support region (40b) continuous to the first outer region (40a) and overlapping the rider support (33), and
a second outer region (40c) continuous to the support region (40b) and overlapping the second side wall (34b);
the outer cover member (40) has a textured portion (42) including a convex portion (42a) and a concave portion (42b), the textured portion (42) being formed in the first outer region (40a), the support region (40b) and the second outer region (40c);
**characterized in that**
the outer cover member (40) further includes an ink layer (50) continuously formed on the convex portion (42a) and the concave portion (42b) in each of the first outer region (40a), the support region (40b) and the second outer region (40c); and
a portion of the ink layer (50) that is located on the concave portion (42b) has a thickness (d2) larger than that of a portion of the ink layer (50) that is located on the convex portion (42a).

2. The vehicle seat (20) according to claim 1, wherein the rider support (33) of the seat base (30) is undulated.

3. The vehicle seat (20) according to claim 1 or 2, wherein the first side wall (34a) and the second side wall (34b) of the seat base (30) each include two areas (34a1 and 34a2) that are continuous to each other and have different lengths (L1 and L2) in the thickness direction (TD) of the rider support (33).

4. The vehicle seat (20) according to any one of claims 1 through 3, wherein:
the ink layer (50) contains a resin material; and
the outer cover member (40) further includes an outer cover member main body (40y) supporting the ink layer (50), and an intermediate layer (51) provided between the outer cover member main body (40y) and the ink layer (50), the intermediate layer (51) containing a resin material of a same type as the resin material contained in the ink layer (50).

5. The vehicle seat (20) according to claim 4, wherein:
the resin material contained in the ink layer (50) is an acrylic resin; and
the intermediate layer (51) contains an acrylic resin.

6. The vehicle seat (20) according to any one of claims 1 through 5, wherein the portion of the ink layer (50) that is located on the concave portion (42b) does not exceed a height from a trough of the concave portion (42b) to a peak of the convex portion (42a).

7. A vehicle, comprising the vehicle seat (20) according to any one of claims 1 through 6.

## Patentansprüche

1. Fahrzeugsitz (20), der umfasst:
ein Sitz-Unterteil (30), das ein Platten-Element (31) und ein Polster-Element (32) enthält, das auf eine Oberfläche (31c) des Platten-Elementes (31) geschichtet ist; sowie
ein äußeres Abdeckungs-Element (40), das das Polster-Element (32) abdeckt, wobei das äußere Abdeckungs-Element (40) an einer Rückseite (31d) des Platten-Elementes (31) befestigt ist;
und wobei:
das Sitz-Unterteil (30) einen Fahrer-Träger (33), eine erste Seitenwand (34a), die sich in einer Dickenrichtung (TD) des Fahrer-Trägers (33) von einem Ende des Fahrer-Trägers (33) in einem Querschnitt parallel zu einer Breitenrichtung (WD) und der Dickenrichtung (TD) des Fahrer-Trägers (33) erstreckt, sowie eine zweite Seitenwand (34b) enthält, die sich in der Dickenrichtung (TD) des Fahrer-Trägers (33) von dem anderen Ende des Fahrer-Trägers (33) in dem Querschnitt erstreckt;
das äußere Abdeckungs-Element (40) einschließt:
einen ersten äußeren Bereich (40a), der die erste Seitenwand (34a) überlappt,
einen Trage-Bereich (40b), der sich an den ersten äußeren Bereich (40a) anschließt und den Fahrer-Träger (33) überlappt, sowie
einen zweiten äußeren Bereich (40c), der sich an den Trage-Bereich (40b) anschließt und die zweite Seitenwand (34b) überlappt;
wobei das äußere Abdeckungs-Element (40) einen texturierten Abschnitt (42) aufweist, der einen konvexen Abschnitt (42a) sowie einen konkaven Abschnitt (42b) enthält, wobei der texturierte Abschnitt (42) in dem ersten äußeren Bereich (40a), dem Trage-Bereich (40b) und dem zweiten äußeren Bereich (40c) ausgebildet ist;
**dadurch gekennzeichnet, dass**
das äußere Abdeckungs-Element (40) des Weiteren eine Druckfarben-Schicht (50) enthält, die jeweils in dem ersten äußeren Bereich (40a), dem Trage-Bereich (40b) und dem zweiten äußeren Bereich (40c) durchgehend auf dem konvexen Abschnitt (42a) und dem konkaven Abschnitt (42b) ausgebildet ist; und
ein Abschnitt der Druckfarben-Schicht (50), der sich auf dem konkaven Abschnitt (42b) befindet, eine Dicke (d2) hat, die größer ist als die eines Abschnitts der Druckfarben-Schicht (50), der sich auf dem konvexen Abschnitt (42a) befindet.

2. Fahrzeugsitz (20) nach Anspruch 1, wobei der Fahrer-Träger (33) des Sitz-Unterteils (30) gewellt ist.

3. Fahrzeugsitz (20) nach Anspruch 1 oder 2, wobei die erste Seitenwand (34a) und die zweite Seitenwand (34b) des Sitz-Unterteils (30) jeweils zwei Bereiche (34a1 und 34a2) einschließen, die sich aneinander anschließen und in der Dickenrichtung (TD) des Fahrer-Trägers (33) unterschiedliche Längen (L1 und L2) haben.

4. Fahrzeugsitz (20) nach einem der Ansprüche 1 bis 3, wobei
die Druckfarben-Schicht (50) ein Harzmaterial enthält; und
das äußere Abdeckungs-Element (40) des Weiteren einen Hauptkörper (40y) des äußeren Abdeckungs-Elementes, der die Druckfarben-Schicht (50) trägt, sowie eine Zwischenschicht (51) einschließt, die zwischen dem Hauptkörper (40y) des äußeren Abdeckungs-Elementes und der Druckfarben-Schicht (50) vorhanden ist, wobei die Zwischenschicht (51) ein Harzmaterial des gleichen Typs wie der des in der Druckfarben-Schicht (50) enthaltenen Harzmaterials enthält.

5. Fahrzeugsitz (20) nach Anspruch 4, wobei:
das in der Druckfarben-Schicht (50) enthaltene Harzmaterial ein Acrylharz ist; und
die Zwischenschicht (51) ein Acrylharz enthält.

6. Fahrzeugsitz (20) nach einem der Ansprüche 1 bis 5, wobei der Abschnitt der Druckfarben-Schicht (50), der sich auf dem konkaven Abschnitt (42b) befindet, eine Höhe von einer Mulde des konkaven Abschnitts (42b) bis zu einer Spitze des konvexen Abschnitts (42a) nicht überschreitet.

7. Fahrzeug, das den Fahrzeugsitz (20) nach einem der Ansprüche 1 bis 6 umfasst.

## Revendications

1. Siège de véhicule (20) comprenant :
une base formant siège (30) comprenant un élément plaque (31) et un élément coussin (32) empilé sur une surface (31c) de l'élément plaque (31) ; et
un élément de couverture extérieure (40) couvrant l'élément coussin (32), l'élément de couverture extérieure (40) étant fixé sur une surface postérieure (31d) de l'élément plaque (31) ;
dans lequel :
la base formant siège (30) comprend un support pour conducteur assis (33), une première paroi latérale (34a) s'étendant dans un sens de l'épaisseur (TD) du support pour conducteur assis (33) en partant d'une extrémité du support pour conducteur assis (33) en coupe transversale parallèle à un sens de la largeur (WD) et au sens de l'épaisseur (TD) du support pour conducteur assis (33), et une seconde paroi latérale (34b) s'étendant dans le sens de l'épaisseur (TD) du support pour conducteur assis (33) en partant de l'autre extrémité du support pour conducteur assis (33) dans la coupe transversale ;
l'élément de couverture extérieure (40) comprend :
une première région externe (40a) recouvrant la première paroi latérale (34a),
une région de support (40b) dans la continuité de la première région externe (40a) et recouvrant le support pour conducteur assis (33), et
une seconde région externe (40c) dans la continuité de la région de support (40b) et recouvrant la seconde paroi latérale (34b) ;
l'élément de couverture extérieure (40) comprend une partie texturée (42) incluant une partie convexe (42a) et une partie concave (42b), la partie texturée (42) étant formée dans la première région externe (40a), la région de support (40b) et la seconde région externe (40c) ;
**caractérisé en ce que**
l'élément de couverture extérieure (40) comprend en outre une couche d'encre (50) formée de manière continue sur la partie convexe (42a) et la partie concave (42b) dans chacune des première région externe (40a), région de support (40b) et seconde région externe (40c) ; et
une partie de la couche d'encre (50) qui se trouve dans la partie concave (42b) a une épaisseur (d2) supérieure à une partie de la couche d'encre (50) qui se trouve dans la partie convexe (42a).

2. Siège de véhicule (20) selon la revendication 1, dans lequel le support pour conducteur assis (33) de la base formant siège (30) est ondulé.

3. Siège de véhicule (20) selon la revendication 1 ou 2, dans lequel la première paroi latérale (34a) et la seconde paroi latérale (34b) de la base formant siège (30) comprennent chacune deux zones (34a1 et 34a2) dans la continuité l'une de l'autre qui ont des longueurs différentes (L1 et L2) dans le sens de l'épaisseur (TD) du support pour conducteur assis (33).

4. Siège de véhicule (20) selon l'une quelconque des revendications 1 à 3, dans lequel :
la couche d'encre (50) contient une matière en résine ; et
l'élément de couverture extérieure (40) comprend en outre un corps principal d'élément de couverture extérieure (40y) supportant la couche d'encre (50), et une couche intermédiaire (51) située entre le corps principal d'élément de couverture extérieure (40y) et la couche d'encre (50), la couche intermédiaire (51) contenant une matière en résine d'un même type que la matière en résine contenue dans la couche d'encre (50).

5. Siège de véhicule (20) selon la revendication 4, dans lequel :
la matière en résine contenue dans la couche d'encre (50) est une résine acrylique ; et
la couche intermédiaire (51) contient une résine acrylique.

6. Siège de véhicule (20) selon l'une quelconque des revendications 1 à 5, dans lequel la partie de la couche d'encre (50) qui se trouve sur la partie concave (42b) ne dépasse pas une hauteur allant d'un creux de la partie concave (42b) à un sommet de la partie convexe (42a).

7. Véhicule, comprenant le siège de véhicule (20) selon l'une quelconque des revendications 1 à 6.
